# EUROPÄISCHE PATENTSCHRIFT

(11) **EP 3 312 031 B1**
(45) Veröffentlichungstag und Bekanntmachung des Hinweises auf die Patenterteilung: **06.01.2021**
(21) Anmeldenummer: 17169630.5
(22) Anmeldetag: 05.05.2017
(51) Int. Cl.: B60H 1/00, B60H 3/00, B01D 46/00, B01D 46/44, B01D 46/46, B60H 3/06

(54) **LÜFTUNGSSYSTEM IN EINER MOBILEN EINRICHTUNG UND VERFAHREN ZUM BETREIBEN EINES LÜFTUNGSSYSTEMS IN EINER MOBILEN EINRICHTUNG**
VENTILATION SYSTEM IN A MOBILE DEVICE AND METHOD FOR OPERATING A VENTILATION SYSTEM IN A MOBILE DEVICE
SYSTÈME D'AÉRATION DANS UN DISPOSITIF MOBILE ET PROCÉDÉ DE FONCTIONNEMENT D'UN SYSTÈME D'AÉRATION DANS UN DISPOSITIF MOBILE

(43) Veröffentlichungstag der Anmeldung: 25.04.2018
(73) Patentinhaber: Carl Freudenberg KG, 69469 Weinheim (DE)
(72) Erfinder: Stahl, Ulrich, 69514 Laudenbach (DE); Bräunling, Volker, 64646 Heppenheim (DE); Arnold, Anette, 64342 Seeheim-Jugenheim (DE)

(56) Entgegenhaltungen:
- WO-A1-2014/089785
- WO-A1-2017/010719
- DE-A1-102014 225 272
- US-A1- 2016 097 311

## Beschreibung

### Technisches Gebiet

Die Erfindung betrifft Lüftungssysteme in mobilen Einrichtungen, insbesondere Lüftungssysteme, die mit einer Filtervorrichtung zum Filtern von Schadstoffen aus der Umgebungsluft ausgestattet sind.

### Technischer Hintergrund

Lüftungssysteme für mobile Einrichtungen werden standardmäßig in Kraftfahrzeugen eingesetzt, um eine Frischluftzufuhr in den Innenraum, d.h. in der Regel die Fahrgastzelle, zu gewährleisten.

Diese Lüftungssysteme ermöglichen die Steuerung des in den Innenraum geleiteten Luftstroms, insbesondere eine Steuerung der Strömungsgeschwindigkeit und der Erwärmung und Kühlung der Luft. Zudem kann ein Umluftanteil variabel eingestellt werden, der einen Anteil von umgewälzter Innenraumluft angibt.

Zusehends werden Lüftungssysteme in Kraftfahrzeugen mit Filtervorrichtungen versehen, die die angesaugte Umgebungsluft filtern, bevor sie diese in den Innenraum leiten. Die Filterleistung ergibt sich dabei in der Regel durch den durch die Filtervorrichtung geleiteten Luftstrom und die Leistungsfähigkeit der Filtervorrichtung. Die Filtervorrichtung ist dabei in der Regel passiv, d.h. die Leistungsfähigkeit der Filtervorrichtung kann nicht beeinflusst werden und ändert sich lediglich aufgrund deren Schadstoffbeladung. Die Aufnahme von Schadstoffen aus der Umgebung ergibt sich aus der Verschmutzung der angesaugten Umgebungsluft und der Strömungsgeschwindigkeit durch die Filterelemente der Filtervorrichtung. So kann bei einem eingestellten Betriebszustand des Lüftungssystems und bei einer variierenden Luftqualität der Umgebungsluft in der Regel keine gleichbleibende Luftqualität in der Fahrgastzelle des Kraftfahrzeugs erreicht werden, und die Schadstoffbelastung der Innenraumluft in der Fahrgastzelle kann somit über oder unter einem gewünschten Niveau liegen.

Es ist aus der DE 10 2008 014 401 A1 auch bekannt, ein Kraftfahrzeug mit einer Vorrichtung zur Belüftung eines Fahrzeug-Innenraums zur Verfügung zu stellen, die in Abhängigkeit von der Luftqualität im Fahrzeug-Innenraum eine zusätzliche Luftreinigung aktiviert.

Weiterhin ist aus der EP 3 081 414 A2 eine Vorrichtung zur Erhaltung und Verbesserung der Luftqualität in einem Innenraum bekannt mit einer Sensorik zum Erfassen der Luftqualität im Innenraum und in einem Außenraum und einer Filtervorrichtung zum Reinigen von Luft. Sie umfasst ferner ein Steuergerät, durch das anhand der Signale der Sensorik Steuersignale für die Filtervorrichtung erzeugbar sind. Die Filtervorrichtung beinhaltet Reinigungsprogramme, welche vorab in einem Steuergerät hinterlegt werden.

Auch ist aus der DE 10 2014 206 451 A1 ein Verfahren zur Ansteuerung einer automatisierten Klimatisierungsvorrichtung eines Kraftfahrzeugs bekannt, bei dem eine Schadstoff-Inhalationsgefahr für den Fahrer des Kraftfahrzeugs erkannt wird und bei erkannter Schadstoff-Inhalationsgefahr, ein Betriebszustand einer Lüftungseinrichtung der Klimatisierungsvorrichtung verändert wird.

Die WO 2017/010719 A1 zeigt ein Lüftungssystem für ein Fahrzeug, wobei an mehreren Stellen im Innenraum die Luftqualität gemessen werden kann, insbesondere dort, wo Passagiere sitzen. Es ist eine Einrichtung vorgesehen zu Verbesserung der Luftqualität an den Messstellen. Dazu wird gezielt gefilterte Luft dorthin geleitet.

Die DE 10 2014 225 272 A2 betrifft eine Innenraumluftfiltereinrichtung für eine Klimatisierungsanlage zum Klimatisieren eines Innenraums eines Fahrzeugs, insbesondere eines Straßenfahrzeugs. Die Erfindung betrifft außerdem ein Verfahren zum Filtern eines Luftstroms für einen Innenraum eines Fahrzeugs gemäß dem abhängig von der Zuluftqualität der Luftstrom auf einen oder mehrere Filter einer bestimmten Ausprägung verteilt wird.

Während eine zu hohe Filtrationsleistung der Umgebungsluft ein schnelles Zusetzen der Filtervorrichtung mit Partikeln oder eine schnelle Beladung der Filtervorrichtung mit gasförmigen, flüchtigen Schadstoffen (z.B. VOC: Volatile Organic Compounds) und dadurch einen häufigen Austausch der Filtervorrichtung erforderlich machen, führt eine zu geringe Filterwirkung zu einer übermäßigen Schadstoff-Belastung der Fahrzeuginsassen in der Fahrgastzelle.

Es ist daher wünschenswert, ein Lüftungssystem zur Verfügung zu stellen, mit dem eine möglichst gleichbleibend gute Luftqualität in einem Innenraum erreicht wird und die Filterwirkung der Filtervorrichtung angepasst ist, um einen zu häufigen Austausch oder eine zu häufige Reinigung der Filtervorrichtung zu vermeiden. Weiterhin soll erreicht werden, dass der Betrieb des Lüftungsgebläses bei möglichst geringem Energieverbrauch, bei möglichst geringer Lüfterdrehzahl und möglichst geringem Geräuschniveau gewährleistet wird.

### Offenbarung der Erfindung

Diese Aufgabe wird durch das Lüftungssystem für eine mobile Einrichtung gemäß Anspruch 1 sowie durch das Verfahren zum Betreiben eines Lüftungssystems gemäß dem nebengeordneten Anspruch gelöst.

Weitere Ausgestaltungen sind in den abhängigen Ansprüchen angegeben.

Gemäß einem ersten Aspekt ist ein Lüftungssystem für eine mobile Einrichtung vorgesehen, umfassend:
- eine variabel einstellbare Filtervorrichtung, wobei die Filtervorrichtung mindestens eine ansteuerbare Filtercharakteristik bezüglich einer Schadstoffklasse aufweist;
- eine Einrichtung zum Erfassen einer Information über die Luftqualität in der Umgebung der mobilen Einrichtung und einer Information über die Luftqualität in einem Innenraum der mobilen Einrichtung; und
- eine Steuereinheit, die ausgebildet ist, um abhängig von der Information über die Luftqualität die Filtercharakteristik der Filtervorrichtung stufenlos zu variieren.

Eine Idee des obigen Lüftungssystems besteht darin, anhand einer Information über die Luftqualität der Umgebungsluft, d. h. eine Belastung der Umgebungsluft mit Schadstoffpartikeln und/oder gasförmigen, flüchtigen Schadstoffen (z.B. VOCs), an der aktuellen Fahrzeugposition zu nutzen und eine Filterleistung einer variabel einstellbaren Filtervorrichtung entsprechend abhängig von der Luftqualität der Umgebungsluft anzupassen. Dies ermöglicht es beispielsweise, durch eine einfache Steuerung eine gleichbleibende gewünschte Luftqualität in dem Innenraum einzustellen, ohne aktiv in die Steuerung des Lüftungssystems bzw. der Klimaanlage z. B. bezüglich der Lufttemperatur, des Umluftanteils oder des Volumenstromes eingreifen zu müssen, da diese Parameter in der Regel vom Benutzer vorgegeben werden.

Erfindungsgemäß wird eine Angabe zu einer relevanten Luftqualität für eine Schadstoffklasse aus der mindestens einen Angabe zu der Luftqualität für die betreffende Schadstoffklasse in der Umgebung und der mindestens einen Angabe zu der Luftqualität für die betreffende Schadstoffklasse im Innenraum abhängig von einem Umluftanteil bestimmt, wobei die Steuereinheit ausgebildet ist, um abhängig von der Angabe zu der relevanten Luftqualität die Filtercharakteristik der Filtervorrichtung stufenlos zu variieren, so dass eine gewünschte Luftqualität im Innenraum erreicht wird.

Gemäß einer Ausführungsform kann die Steuereinheit ausgebildet sein, um abhängig von der Information über die Luftqualität für die Schadstoffklasse in der Umgebung der mobilen Einrichtung die Filtercharakteristik der Filtervorrichtung bezüglich der betreffenden Schadstoffklasse so zu variieren, dass während des Fahrens Schwankungen der Luftqualität in einem Innenraum der mobilen Einrichtung gegenüber Schwankungen der Luftqualität in der Umgebung der mobilen Einrichtung reduziert sind.

Erfindungsgemäß kann die variabel einstellbare Filtervorrichtung ein oder mehrere Filterelemente aufweisen, deren jeweilige Filterleistung bzw. Filtercharakteristik unabhängig voneinander variabel einstellbar ist.

Durch die einstellbare Filtervorrichtung kann die Filtervorrichtung in einer oder mehreren der Eigenschaften Strömungswiderstand, Filtercharakteristik für Partikel, Filtercharakteristik für gasförmige, flüchtige Schadstoffe (z.B. VOCs), Änderung der aktiven Filterfläche veränderbar sein. Dadurch kann die Aufnahme von Schadstoffpartikeln oder gasförmigen, flüchtigen Schadstoffen aus der Umgebungsluft eingestellt werden.

Das obige Lüftungssystem ermöglicht es so, die Filterwirkung abhängig von den momentan eingestellten Betriebsparametern des Lüftungssystems, wie Strömungsstärke und Umluftanteil, und der Information über die Luftqualität der Umgebungsluft anzupassen, so dass die verwendete Filtervorrichtung optimal benutzt wird. Dies bedeutet, dass eine Luftqualität im Inneren des Innenraums angestrebt wird, die einer gewünschten Luftqualität entspricht, wobei bei hoher Schadstoffbelastung in der Umgebungsluft eine zu geringe Filterleistung oder bei geringer Schadstoffbelastung in der Umgebungsluft eine zu hohe Filterleistung durch die Einstellung der Filtercharakteristik vermieden wird. Dadurch können beispielsweise ein zu schneller Verschleiß der Filtervorrichtung oder eine zu schlechte Luftqualität in dem Innenraum vermieden werden. Durch die Steuerung der Filtercharakteristik, insbesondere der Porosität, Permeabilität oder der Druckänderung (Strömungswiderstand) wird ein zu hoher Energieverbrauch oder eine zu hohe Geräuschentwicklung des Lüfters (Gebläses) oder der Filtervorrichtung verhindert. Das Vorsehen einer variabel einstellbaren Filtervorrichtung ermöglicht es dadurch, die Luftqualität in dem Innenraum ohne Eingriff in die Steuerung des Lüftungssystems einstellen zu können.

Weiterhin kann durch das obige Lüftungssystem der Betrieb des Lüftungsgebläses bei möglichst geringem Energieverbrauch, möglichst geringer Lüfterdrehzahl und möglichst geringem Geräuschniveau erreicht werden. Insbesondere bei batteriegetriebenen Fahrzeugen (EV) mit begrenzter Verfügbarkeit von elektrischer Energie muss ein hoher Fokus auf die Einsparung von Energie gelegt werden, sodass die anpassbare Filterleistung bzw. der Luftwiderstand des Filters eine signifikante Reduzierung des Stromverbrauchs des Lüftungsgebläses ermöglicht. Kennzeichnend für batteriegetriebenen Fahrzeuge ist auch deren niedrigeres Innengeräuschniveau und die Reduzierung der Drehzahl des Lüftungsgebläses verringert die Geräuschentwicklung entsprechend.

Weiterhin kann die Einrichtung zum Erfassen einer Information über eine Luftqualität in der Umgebung des Kraftfahrzeugs eine Messeinrichtung zum Messen mindestens einer Angabe zu der Luftqualität für eine Schadstoffklasse und/oder eine Kommunikationseinrichtung umfassen, um mindestens eine Angabe zu der Luftqualität für eine Schadstoffklasse von extern zu empfangen.

Es kann weiterhin vorgesehen sein, dass die Filterleistung des betreffenden Filterelements mithilfe einer Bypassleitung und eines darin angeordneten Bypass-Ventils einstellbar ist, um die Druckdifferenz über dem betreffenden Filterelement einzustellen. Dadurch kann der Volumenstrom durch das betreffende Filterelement eingestellt werden.

Weiterhin kann das mindestens eine Filterelement einen Faserfilter umfassen, wobei der Faserfilter, insbesondere Vliesstofffilter, mit einer elektrisch leitfähigen Substanz, insbesondere metallischen Fasern, z.B. Silberfasern, versehen ist und/oder mit einer elektrisch leitfähigen Substanz, insbesondere Kohle oder Kohlefasern, ausgerüstet ist und/oder mit elektrisch leitfähigen Metallionen, insbesondere mit den Materialien Fe, Ni, Cu, Ag, ausgerüstet ist.

Dazu ist die Steuereinheit derart ausgebildet, als eine Steuergröße eine variable Spannung an den elektrisch leitfähigen Faserfilter anzulegen, um eine Abscheiderate von Schadstoffpartikeln durch elektrostatische Anziehung einzustellen.

Weiterhin kann das mindestens eine Filterelement einen Faserfilter umfassen, wobei der Faserfilter, insbesondere Vliesstofffilter, einen Anteil Formgedächtnismetalle enthält, insbesondere Nitinoldraht, der eine Änderung der räumlichen Ausdehnung des Filterelementes mittels Temperaturänderung ermöglicht. Durch die Steuerung der räumlichen Ausdehnung des Filterelementes wird die Filtercharakteristik insbesondere stufenlos oder quasi stufenlos variiert.

Weiterhin kann das mindestens eine Filterelement, insbesondere Faserfilter, mit magnetischer und/oder chemischer Eigenschaft versehen sein, welche zur Änderung der räumlichen Ausdehnung, der Dichte-, Oberflächen- und Porositätsänderung der Filterstruktur benutzt werden kann.

Gemäß einer weiteren Ausführungsform kann das mindestens eine Filterelement einen beschichteten Faserfilter umfassen, wobei der Faserfilter, insbesondere Vliesstofffilter, mit TiO₂-Partikeln beschichtet ist.

Insbesondere kann dazu die Steuereinheit ausgebildet sein, um durch Bestrahlung mit einer steuerbaren UV-Lichtquelle die Zersetzung von flüchtigen Schadstoffen zu bewirken, wobei als Steuergröße die Stärke des auf den beschichteten Faserfilter eingestrahlten UV-Lichts die entsprechende Filterleistung bestimmt. Die TiO2-Partikel Beschichtung auf den Fasern des Filtermaterials können auch durch die Bestrahlung mit Licht einer definierten Wellenlänge (z.B. Ultraviolett oder Infrarot etc.) und Intensität zur Ladungstrennung und damit zur Erzeugung von elektrostatischen Ladungen auf den Filterfasern führen. Somit kann eine permanente elektrostatische Filterwirkung aufrechterhalten bzw. die elektrostatische Filtrationsleistung durch Dosierung der Lichtintensität geregelt werden.

Weiterhin kann die Filtervorrichtung eine Ionisierungseinheit mit mindestens einer Sprühelektrode oder einem Kondensatorfeld und mindestens ein Filterelement umfassen, wobei das Filterelement als Faserfilter ausgebildet ist, insbesondere als Vliesstofffilter, der durch das von der Ionisierungseinheit variabel erzeugbare elektrische Feld eine variabel einstellbare Filterleistung hat.

Weiterhin kann die Filtervorrichtung eine Plasmaerzeugungseinheit und mindestens ein Filterelement umfassen, wobei das Filterelement als Faserfilter ausgebildet ist, insbesondere als Vliesstofffilter, der durch die von der Plasmaeinheit variabel erzeugbaren Ionen eine variabel einstellbare Filterleistung erhält.

Weiterhin kann die Steuereinheit ausgebildet sein, um abhängig von der Information über die Luftqualität in der Umgebung des Kraftfahrzeugs die Filtercharakteristik der Filtervorrichtung so zu variieren, dass während des Fahrens Schwankungen der Luftqualität in einem Innenraum des Kraftfahrzeugs gegenüber Schwankungen der Luftqualität in der Umgebung des Kraftfahrzeugs reduziert sind.

Weiterhin kann eine weitere Messeinrichtung vorgesehen sein, um eine Luftqualität in einem Innenraum der mobilen Einrichtung zu erfassen, wobei die Steuereinheit ausgebildet ist, um im Umluftbetrieb oder einem gemischten Betrieb abhängig von der Information über die Luftqualität in dem Innenraum der mobilen Einrichtung die Filtercharakteristik der Filtervorrichtung so zu variieren, dass während des Fahrens Schwankungen der Luftqualität in einem Innenraum der mobilen Einrichtung gegenüber Schwankungen der Luftqualität in der mobilen Einrichtung reduziert sind.

Gemäß einem weiteren Aspekt ist ein Verfahren zum Betreiben des obigen Lüftungssystems für eine mobile Einrichtung vorgesehen, wobei eine Information über die Luftqualität in der Umgebung der mobilen Einrichtung ermittelt wird und wobei abhängig von der Information über die Luftqualität die Filtercharakteristik der Filtervorrichtung stufenlos variiert wird.

### Kurzbeschreibung der Zeichnungen

Ausführungsformen werden nachfolgend anhand der beigefügten Zeichnungen näher erläutert. Es zeigen:
- Figur 1: eine schematische Darstellung eines Lüftungssystems für ein Kraftfahrzeug mit einer Filtervorrichtung;
- Figur 2: eine schematische Darstellung einer Filtervorrichtung mit zwei seriell angeordneten Filterelementen; und
- Figur 3: ein Flussdiagramm zur Veranschaulichung eines Verfahrens zum Betreiben eines Lüftungssystems in einem Kraftfahrzeug.

### Beschreibung von Ausführungsformen

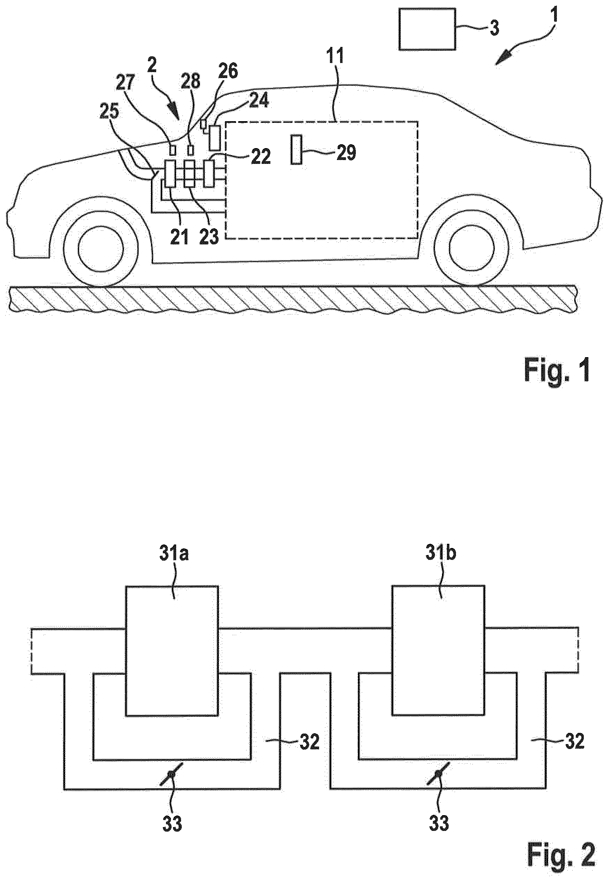

In Figur 1 ist ein Kraftfahrzeug 1 mit einem Lüftungssystem 2 schematisch dargestellt. Das Lüftungssystem 2 umfasst einen Lüfter 21, der ausgebildet ist, um Umgebungsluft anzusaugen und als einen Luftstrom in einem Innenraum 11 (Fahrgastzelle) des Kraftfahrzeugs 1 bereitzustellen.

Der in den Innenraum 11 geführte Luftstrom kann weiterhin z. B. durch einen stromabwärts des Lüfters 21 angeordneten Wärmetauscher 22 einer Klimaanlage gekühlt werden.

Ferner kann die durch den Lüfter 21 angesaugte Umgebungsluft durch eine Filtervorrichtung 23 geführt werden, die Schadstoffe aus der Umgebungsluft filtert.

Weiterhin kann durch einen stromaufwärts des Lüfters 21 angeordneten Umluftsteller 25 ein Umluftanteil eingestellt werden, durch den ein Anteil der durch die Lüftereinrichtung angesaugten Innenraumluft zur Zirkulation der Innenraumluft angegeben wird.

Das Lüftungssystem 2 umfasst weiterhin eine Steuereinheit 24, mit der Betriebsparameter des Lüftungssystems 2 gesteuert bzw. geregelt werden können. So kann die Steuereinheit 24 die Temperatur des in den Innenraum 11 geleiteten Luftstroms durch Einstellen der Klimaanlage, den Volumenstrom des Luftstroms durch entsprechendes Ansteuern der Lüftereinrichtung 21 und den Umluftanteil durch Einstellen des Umluftstellers 25 vorgeben.

Weiterhin kann die Filtervorrichtung 23 ein oder mehrere einstellbare Filterelemente 31 aufweisen. Die Filterelemente 31 können beispielsweise durch die Verwendung elektrisch leitfähiger Substanzen, photokatalytische Effekte, mechanische Veränderungen und/oder chemische Reaktionen jeweils verschiedene Filtercharakteristiken erhalten. Die Einstellbarkeit der Filtercharakteristik der Filtervorrichtung 23 ermöglicht eine Vorgabe eines Strömungswiderstands der Filtervorrichtung 23, einer Abscheiderate für Schadstoffpartikel, einer Absorptionsleistung für gasförmige, flüchtige Schadstoffe, einer effektiven Filterquerschnittsfläche, eines Ionisierungsgrades und dergleichen.

Die Steuereinheit 24 kann weiterhin mit einer Messeinrichtung 26 in Verbindung stehen, die die Luftqualität der Umgebungsluft, insbesondere deren Gehalt an Schadstoffpartikeln und deren Gehalt an flüchtigen Schadstoffen, misst. Diese Messeinrichtung 26 kann auch dem Lüftungssystem 2 direkt zugeordnet sein.

Alternativ oder zusätzlich zu der Messeinrichtung 26 kann die Steuereinheit 24 mit einer Positionsbestimmungseinrichtung 27 und einer Kommunikationseinrichtung 28 in Verbindung stehen, um abhängig von einer Fahrzeugposition von extern Umgebungsdaten, insbesondere Informationen über die Luftqualität, zu empfangen. Diese Informationen können Partikelbelastung für Partikel verschiedener Größenklassen, eine Belastung mit flüchtigen Schadstoffen, insbesondere für verschiedene Stoffgruppen, die Lufttemperatur, Luftfeuchtigkeit und dergleichen umfassen. Somit können alternativ oder zusätzlich zur Messung der Luftqualität über die fahrzeugeigene Messeinrichtung 26 insbesondere durch Übermittlung der Fahrzeugposition auch die entsprechenden Informationen oder ergänzende Informationen von einer Zentralstelle 3 empfangen werden, die Angaben bzw. Informationen über die lokale Luftqualität an der Position des Kraftfahrzeugs 1 vorhält.

Abhängig von der Information über die Luftqualität wird eine entsprechende Einstellung des Lüftungssystems 2 durch die Steuereinheit 24 vorgenommen. Insbesondere sieht die Steuereinheit 24 vor, in einem Umgebungsluftbetrieb, d.h. es wird Umgebungsluft in den Innenraum 11 gefördert, abhängig von der Luftqualität der Umgebungsluft die Filterwirkung bzw. Filtercharakteristik der Filtervorrichtung 23 variabel (stufenlos) einzustellen.

Wie in Figur 2 gezeigt, kann die Filtervorrichtung 23 beispielsweise mehrere Filterelemente 31 aufweisen, wie es beispielsweise in Figur 2 näher dargestellt ist. Figur 2 zeigt zwei Filterelemente 31a, 31b, die seriell im Luftstrom angeordnet sind. Die Filterelemente 31 können in alternativen Ausführungsformen alternativ oder zusätzlich parallel in dem Luftstrom der Umgebungsluft angeordnet sein und jeweils eine bestimmte einstellbare Filterwirkung bzw. eine bestimmte Filtercharakteristik, d. h. eine von dem Volumenstrom der hindurchströmenden Luft und der jeweiligen Ansteuerung abhängige Filterleistung bereitstellen. Die Filterelemente 31 können jeweils einer der folgenden Filterarten entsprechen:
- Faserfilter, insbesondere Vliesstofffilter, der mit einer elektrisch leitfähigen Substanz, wie z. B. Silberfasern, versehen ist oder bedruckt, wobei die Drucksubstanz elektrisch leitfähig ist und z. B. Kohle oder Kohlefasern enthält, oder beschichtet ist, wobei die Beschichtung Metallionen, insbesondere mit den Materialien Fe, Ni, Cu, Ag, enthält. Durch Bestromung des elektrisch leitfähigen Filtermaterials kann die Filterwirkung für das elektrostatische Filtern von Schadstoffpartikeln aus der Umgebungsluft eingestellt werden. Insbesondere kann das Einstellen eines Potenzials des so ausgebildeten Filters dazu genutzt werden, die Abscheiderate von Feststoffpartikeln durch elektrostatische Anziehung einzustellen.
- Faserfilter, insbesondere Vliesstofffilter, der mit TiO₂-Partikeln beschichtet ist. Diese können durch zusätzliche Bestrahlung mit einer durch die Steuereinheit 24 steuerbaren UV-Lichtquelle die Zersetzung von organischen Geruchsstoffen (VOC) bewirken bzw. die Bestrahlung mit Licht einer definierten Wellenlänge/Intensität kann die elektrostatische Filtrationswirkung des Filterelements dauerhaft aufrechthalten oder gezielt einstellbar machen. Die Stärke des auf den Faserfilter eingestrahlten UV-Lichts bzw. Licht einer definierten Wellenlänge/Intensität bestimmt die entsprechende Filterleistung bzw. Filterscharakteristik.
- Faserfilter, der durch Zudosierung eines Zusatzstoffes eine antiallergene Wirkung auf der Faseroberfläche erzielt. Ein solcher Zusatzstoff kann beispielsweise Zitronensäure sein. Durch Steuerung der Menge der auf den Faserfilter aufgebrachten Zitronensäure kann die antiallergene Wirkung entsprechend eingestellt werden. Zusätzlich kann durch Zudosierung des Zusatzstoffes und eines Bestrahlens ein photokatalytischer Effekt erreicht werden, der zusätzlich zu der antiallergenen Wirkung eine Zersetzung von flüchtigen Schadstoffen (z.B. VOC) bewirkt.
- Faserfilter, wobei eine Filtercharakteristik durch mechanische Verformung erreicht wird. Beispielsweise kann der Faserfilter mit einem Formgedächtnismetalldraht versehen sein, insbesondere Nitinoldraht, der eine Steuerung der räumlichen Ausdehnung des Filterelementes mittels Temperaturänderung ermöglicht. Der Formgedächtnismetalldraht ändert seine Länge um ca. 5-10% bei Erreichen einer vorgebbaren Sprungtemperatur. Durch eine entsprechende Übersetzung bzw. Anordnung des Formgedächtnismetalldrahtes in dem z.B. als Faltenfilter ausgebildeten Faserfilter kann so eine vorgebbare Längenänderung des Filterelementes, z.B. durch Zusammendrücken oder Auseinanderziehen der Falten des Faltenfilters (wie bei einer Ziehharmonika) dargestellt werden. Die Ansteuerung erfolgt z. B. über ein elektrisches Heizelement, das den Draht auf die Sprungtemperatur aufheizt. Alternativ kann das Filterelement mit magnetischer und/oder chemischer Eigenschaft ausgebildet sein, welche zur Änderung der räumlichen Ausdehnung, der Dichte-, Oberflächen- und Porositätsänderung der Filterstruktur benutzt werden kann.
- Faserfilter mit einer Ionisierungseinheit mit mindestens einer Sprühelektrode oder ein Kondensatorfeld oder eine Plasmaerzeugungseinheit, wobei der Faserfilter durch das von der Ionisierungs-/Plasmaeinheit (lonenerzeugung) variabel erzeugbare elektrische Feld eine variabel einstellbare Filterleistung hat. Bei einer Ionisierungseinheit wird durch die Sprühelektrode oder das Kondensatorfeld ein elektrisches Feld zwischen der Sprühelektrode/dem Kondensator (Kathode) und der Lüftungssystemkanalwand aus Metall (Anode) aufgebaut. Schadstoffpartikel, die dieses Feld passieren werden elektrisch aufgeladen und dadurch verbessert sich ihre Abscheidung im nachgeschalteten Faserfilter aufgrund erhöhter elektrostatischer Anziehung und damit die Filtercharakteristik dieses Faserfilters. Im Falle, dass die Filtervorrichtung eine Plasmaerzeugungseinheit beinhaltet, werden durch den Plasmagenerator positive und negative Ionen aus den in der Luft enthaltenen Sauerstoff- und Wasserstoffmolekülen erzeugt. Wenn diese Ionen in der Luft auf Mikroben, Pilze, Viren und Milben stoßen, reagieren sie chemisch mit ihnen und machen sie unschädlich. Schadstoffpartikel, die mit diesen geladenen Ionen kollidieren werden elektrisch aufgeladen und dadurch verbessert sich ihre Abscheidung im nachgeschalteten Filterelement und damit die Filtercharakteristik dieses Filterelementes.

Zur Einstellung des Volumenstroms der durch die Filterelemente 31a, 31b strömenden Luft können diese mit Bypass-Leitungen 32a, 32b mit jeweils einer darin angeordneten durch die Steuereinheit 24 steuerbaren Bypass-Klappe 33a, 33b versehen sein, um über die Druckdifferenz über dem jeweiligen Filterelement 31a, 31b eine Strömungsstärke der durch das jeweilige Filterelement strömenden Umgebungsluft einstellen zu können. Dadurch kann alternativ oder zusätzlich die Filtercharakteristik der Filterelemente 31a, 31b eingestellt werden.

Zusätzlich kann die Luftqualität im Innenraum mit einer weiteren Messeinrichtung 29 erfasst und überwacht werden. Alternativ oder zusätzlich zu der Messeinrichtung 26 kann die Steuereinheit 24 mit der weiteren Messeinrichtung 29 in Verbindung stehen, um Informationen über die Luftqualität im Innenraum zu empfangen. Somit können alternativ oder zusätzlich zur Messung der Luftqualität über die Messeinrichtung 26 auch die entsprechenden Informationen oder ergänzende Informationen für die Luftqualität im Innenraum bereitgestellt werden.

Diese können analog zum Umgebungsluftbetrieb für die Steuerung der Filtervorrichtung 23 in einem Umluftbetrieb verwendet werden. Dadurch, dass die Filtervorrichtung 23 im Strömungspfad sowohl für den Umgebungsbetrieb als auch für den Umluftbetrieb angeordnet ist, ist es für die Steuerung der Filtervorrichtung 23 unerheblich, ob die Informationen über die Luftqualität die Umgebungsluft oder die Innenraumluft betrifft. Alternativ kann die Filtervorrichtung 23 bei der Umluftfiltration stromabwärts des Wärmetauschers 22 angeordnet sein.

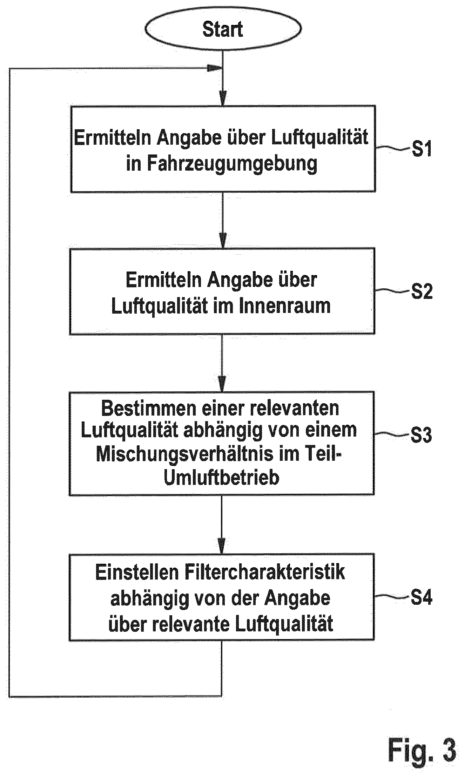

In Figur 3 wird anhand eines Flussdiagramms ein Verfahren zum Betreiben des Lüftungssystems 2 näher erläutert.

In Schritt S1 werden Informationen über die lokale Luftqualität in der Umgebung des Kraftfahrzeugs ermittelt. Dies kann mithilfe der Messeinrichtung 26 und/oder mithilfe einer Abfrage von Informationen über die lokale Luftqualität von der externen Zentralstelle 3 durchgeführt werden. Insbesondere kann die Abfrage ein Übermitteln einer geografischen (z. B. ermittelt durch ein Geolokalisierungssystem, z.B. GPS) Fahrzeugposition an die externe Zentralstelle und ein Empfangen der entsprechenden der Fahrzeugposition zugeordneten Angaben über die lokale Luftqualität durchgeführt werden. Alternativ können Informationen über die Luftqualität in dem gesamten Empfangsbereich der Zentralstelle 3 übermittelt werden, so dass in der Steuereinheit 24 anhand der aktuellen Fahrzeugposition die Information über die lokale Luftqualität ermittelt werden kann.

Die Information über die lokale Luftqualität kann eine Angabe über eine Partikelbelastung (z. B. als Menge von Partikeln eines bestimmten Partikelgrößenbereichs pro Kubikmeter Luft) der Luft, eine Belastung (Konzentrationsangabe) mit flüchtigen Schadstoffen (z. B. als Menge eines flüchtigen Stoffes oder Stoffgruppe pro Kubikmeter Luft), eine Luftfeuchtigkeit und dergleichen angeben.

Die Luftqualität in der Umgebung des Fahrzeugs kann durch PM1-, PM2.5- und PM 10- Messstellen in unmittelbarer Umgebung des Fahrzeuges ermittelt werden und in geeigneter Weise als Eingangsgröße für die Steuerung verwendet werden. Sollte diese Information nicht verfügbar sein, kann auf historische Datenbankwerte für die aktuelle Umgebung des Kraftfahrzeugs zurückgegriffen werden, oder es wird die tatsächlich durch die Messeinrichtung 26 gemessene z.B. PM2.5-Konzentration, bzw. die tatsächlich gemessene Schadgaskonzentration (z.B. VOC) für die Steuerung verwendet.

In Schritt S2 wird eine Information über eine Luftqualität der Luft im Innenraum 11 des Kraftfahrzeugs 1 durch die weitere Messeinrichtung 29 bestimmt.

In Schritt S3 wird eine für die Filtervorrichtung 23 relevante Luftqualität durch das durch den Umluftsteller 25 bestimmte Mischungsverhältnis M der Umgebungsluft mit der Innenraumluft in einem Teil-Umluftbetrieb bestimmt. Das Mischungsverhältnis wird auf die Schadstoffkonzentrationen K_{Innenraum}, K_{Umgebung} der verschiedenen Schadstoffklassen in dem Innenraum bzw. der Umgebung, wie Partikelgrößenklassen von Schadstoffpartikeln und Schadstoffgruppen von flüchtigen Schadstoffen in an sich bekannter Weise angewendet. Es ergibt sich eine Information über die Luftqualität eingangsseitig der Filtervorrichtung 23, auf die die Filtervorrichtung 23 stufenlos eingestellt werden soll. Die Information über die relevante Luftqualität enthält beispielsweise eine Angabe über die Luftqualität bezüglich eines Schadstoffs bzw. bezüglich einer Schadstoffklasse, die von der entsprechenden Schadstoffkonzentration K_{Innenraum}, K_{Umgebung} in dem Innenraum bzw. der Umgebung beispielsweise abhängen kann:
M K_{Innenraum,} +(1-M) K_{Umgebung}

In Schritt S4 werden entsprechend den Angaben über die relevante Luftqualität (Ist-Belastung), die z. B. eine Partikelbelastung (ggfs. in den verschiedenen Partikelgrößenklassen) und/oder eine Belastung der durch den Lüfter 21 angesaugten Luft mit flüchtigen Schadstoffen (ggfs. in den verschiedenen Stoffgruppen) angeben, eine Filtercharakteristik eingestellt. Die Einstellung der Filtercharakteristik kann beispielsweise durch Vorgabe einer elektrischen Spannung für die elektrostatische Filtereinstellung, eine Einstellung einer mechanischen Verformung oder Geometrieänderung (durch entsprechende Ansteuerung eines Aktors wie z.B. der Formgedächtnisdraht) oder durch Vorgabe der Stärke einer UV-Licht-Bestrahlung zum Einstellen der Stärke eines photokatalytischen Effekts, oder durch Vorgabe der Stärke einer Lichtstrahlung einer definierten Wellenlänge und Intensität durchgeführt werden.

In Schritt S4 wird durch die Steuereinheit 24 das Filterelement bzw. die Filterelemente 31a, 31b der Filtervorrichtung 23 so eingestellt bzw. gesteuert, dass eine gewünschte applizierte Filtercharakteristik erreicht wird. Dies kann durch Vorgabe von Kennlinien oder Kennfeldern oder dafür geeignete Steuerungsfunktionen durchgeführt werden. Die Kennlinien oder Kennfelder können eine Angabe zur Luftqualität der Umgebung, eine Steuergröße zur Einstellung des elektrostatischen, mechanischen und/oder photokatalytischen Filtereffekts, und eines Volumenstroms durch die Filtervorrichtung 23 berücksichtigen. Diese Einstellungen können stufenlos ohne Eingriff in die sonstigen Betriebsparameter des Lüftungssystems, wie beispielsweise der Leistungsaufnahme des Lüfters, des Volumenstroms, des Umluftanteils oder der Lufttemperatur oder der eingestellten Heiz- oder Kühlleistung des Wärmetauschers, vorgenommen werden.

Die Einstellung der Filtervorrichtung 23 hat den Vorteil, dass die Filterbeladung mit Partikeln und flüchtigen Schadstoffen entsprechend einer applizierten Filtercharakteristik eingestellt wird und somit eine zu starke Filterung der Umgebungsluft vermieden werden kann, die eine zu schnelle Beladung der Filtervorrichtung 23 bewirken würde. Die zu schnelle Beladung der Filtervorrichtung 23 führt zu kürzeren Austauschintervallen bzw. Wartungsintervallen und damit zu erhöhten Kosten. Gleichzeitig kann vermieden werden, dass die Filterleistung bei starker Belastung der Umgebungsluft zu gering ist, indem die Filterleistung entsprechend einer höheren Belastung der Umgebungsluft erhöht werden kann. Weiterhin kann ein zu hoher Energieverbrauch und eine zu starke Geräuschentwicklung des Lüfters reduziert werden. Zusätzlich zu den Einstellungen der Parameter der Filtervorrichtung 23 können der Luftfeuchteanteil eingestellt werden.

## Patentansprüche

1. Lüftungssystem (2) für eine mobile Einrichtung, insbesondere ein Kraftfahrzeug, umfassend:
- eine variabel einstellbare Filtervorrichtung (23), wobei die variabel einstellbare Filtervorrichtung (23) ein oder mehrere Filterelemente (31a, 31b) aufweist, deren jeweilige Filterleistung stufenlos einstellbar ist und wobei die Filtervorrichtung (23) mindestens eine ansteuerbare variable Filtercharakteristik bezüglich einer Schadstoffklasse aufweist;
- eine Einrichtung (26, 28, 29) zum Erfassen einer Information über die Luftqualität in der Umgebung der mobilen Einrichtung (1) und einer Information über die Luftqualität in einem Innenraum (11) der mobilen Einrichtung (1), wobei die Einrichtung zum Erfassen einer Information über die Luftqualität in dem Innenraum (11) der mobilen Einrichtung (1) eine weitere Messeinrichtung (29) zum Messen mindestens einer Angabe zu der Luftqualität für eine Schadstoffklasse umfasst;
- eine Steuereinheit (24), die ausgebildet ist, um abhängig von der Information über die Luftqualität in der Umgebung die Filtercharakteristik der Filtervorrichtung (23) variabel und stufenlos zu variieren, derart, dass eine Angabe zu einer relevanten Luftqualität für eine Schadstoffklasse aus der mindestens einen Angabe zu der Luftqualität für die betreffende Schadstoffklasse in der Umgebung und der mindestens einen Angabe zu der Luftqualität für die betreffende Schadstoffklasse im Innenraum (11) abhängig von einem Umluftanteil bestimmt wird, wobei die Steuereinheit (24) ausgebildet ist, um abhängig von der Angabe zu der relevanten Luftqualität die Filtercharakteristik der Filtervorrichtung (23) stufenlos zu variieren, so dass eine gewünschte Luftqualität im Innenraum (11) erreicht wird.

2. Lüftungssystem (2) nach Anspruch 1, wobei die Einrichtung zum Erfassen der Information über eine Luftqualität in der Umgebung der mobilen Einrichtung eine Messeinrichtung (26) zum Messen mindestens einer Angabe zu der Luftqualität und/oder eine Kommunikationseinrichtung (28) umfasst, die ausgebildet ist, um mindestens eine Angabe über die Luftqualität für eine Schadstoffklasse in der Umgebung der mobilen Einrichtung (1) von extern zu empfangen.

3. Lüftungssystem (2) nach einem der Ansprüche 1 bis 2, wobei die Steuereinheit (24) ausgebildet ist, um abhängig von der Information über die Luftqualität für eine Schadstoffklasse in der Umgebung der mobilen Einrichtung (1) die Filtercharakteristik der Filtervorrichtung (23) für die betreffende Schadstoffklasse so zu variieren, dass während des Fahrens Schwankungen der Luftqualität in einem Innenraum (11) der mobilen Einrichtung (1) gegenüber Schwankungen der Luftqualität in der Umgebung der mobilen Einrichtung (1) reduziert sind.

4. Lüftungssystem (2) nach Anspruch 1 wobei die Filterleistung des betreffenden Filterelements (31a, 31b) mithilfe einer Bypassleitung (32) und eines darin angeordneten Bypass-Ventils (33) einstellbar ist, um die Druckdifferenz über dem betreffenden Filterelement (31a, 31b) einzustellen.

5. Lüftungssystem (2) nach einem der Ansprüche 1 bis 4, wobei das mindestens eine Filterelement (31, 31b) einen Faserfilter umfasst, wobei der Faserfilter, insbesondere Vliesstofffilter, mit einer elektrisch leitfähigen Substanz, insbesondere metallischen Fasern, versehen ist und/oder mit einer elektrisch leitfähigen Substanz, insbesondere Kohle oder Kohlefasern, ausgerüstet ist und/oder mit elektrisch leitfähigen Metallionen, insbesondere mit den Materialien Fe, Ni, Cu, Ag, ausgerüstet ist, wobei die Steuereinheit (24) ausgebildet ist, eine variable Spannung an den elektrisch leitfähigen Faserfilter anzulegen, um eine Abscheiderate von Partikeln durch elektrostatische Anziehung einzustellen.

6. Lüftungssystem (2) nach einem der Ansprüche 1 bis 5, wobei das mindestens eine Filterelement (31a, 31b) einen Faserfilter umfasst, der mechanisch verformbar ist, einen Anteil Formgedächtnismetalle enthält, der eine Änderung der räumlichen Ausdehnung des Filterelements mittels Temperaturänderung ermöglicht, um eine Filtercharakteristik einzustellen

7. Lüftungssystem (2) nach einem der Ansprüche 1 bis 6, wobei das mindestens eine Filterelement (31a, 31b) einen beschichteten Faserfilter umfasst, wobei der Faserfilter, insbesondere Vliesstofffilter, mit TiO₂-Partikeln beschichtet ist.

8. Lüftungssystem (2) nach einem der Ansprüche 1 bis 7, wobei die variabel einstellbare Filtervorrichtung (23) im Strömungspfad von geförderter Luft vor einer Lüftereinrichtung (21) angeordnet ist.

9. Verfahren zum Betreiben eines Lüftungssystems (2) nach einem der Ansprüche 1 bis 8 für eine mobile Einrichtung (1), wobei eine Information über die Luftqualität für eine Schadstoffklasse in der Umgebung der mobilen Einrichtung (1) ermittelt wird und wobei abhängig von der Information über die Luftqualität die Filtercharakteristik der Filtervorrichtung (23) variiert wird.

10. Mobile Einrichtung (1), insbesondere Kraftfahrzeug mit einem Lüftungssystem (2) nach einem der Ansprüche 1 bis 8.

## Claims

1. Ventilation system (2) for a mobile device, in particular a motor vehicle, comprising:
- a variably adjustable filter apparatus (23), wherein the variably adjustable filter apparatus (23) has one or more filter elements (31a, 31b) whose respective filtering performance is infinitely adjustable, and wherein the filter apparatus (23) has at least one controllable variable filter characteristic relating to a class of pollutants;
- a device (26, 28, 29) for acquiring information about the air quality in the surroundings of the mobile device (1) and information about the air quality in an interior space (11) of the mobile device (1), wherein the device for acquiring information about the air quality in the interior space (11) of the mobile device (1) comprises a further measuring device (29) for measuring at least one indication of the air quality for a class of pollutants;
- a control unit (24) which is designed to vary the filter characteristic of the filter apparatus (23) in a variable and infinitely adjustable fashion as a function of the information about the air quality in the surroundings, in such a way that an indication of relevant air quality for a class of pollutants is determined from the at least one indication of the air quality for the respective class of pollutants in the surroundings and the at least one indication of the air quality for the respective class of pollutants in the interior space (11) as a function of a recirculation proportion, wherein the control unit (24) is designed to vary the filter characteristic of the filter apparatus (23) as a function of the indication of the relevant air quality, in such a way that a desired air quality in the interior space (11) is achieved.

2. Ventilation system (2) according to Claim 1, wherein the device for acquiring the information about air quality in the surroundings of the mobile device comprises a measuring device (26) for measuring at least one indication of the air quality and/or a communication device (28) which is designed to receive at least one indication of the air quality for a class of pollutants in the surroundings of the mobile device (1) from the outside.

3. Ventilation system (2) according to one of Claims 1 and 2, wherein the control unit (24) is designed to vary the filter characteristic of the filter apparatus (23) for the respective class of pollutants as a function of the information about the air quality of a class of pollutants in the surroundings of the mobile device (1), in such a way that during driving fluctuations in the air quality in an interior space (11) of the mobile device (1) are reduced in comparison with fluctuations in the air quality in the surroundings of the mobile device (1).

4. Ventilation system (2) according to Claim 1, wherein the filter performance of the respective filter element (31a, 31b) can be set by means of a bypass line (32) and a bypass valve (33) arranged therein, in order to set the pressure difference across the respective filter element (31a, 31b).

5. Ventilation system (2) according to one of Claims 1 to 4, wherein the at least one filter element (31, 31b) comprises a fibre filter, wherein the fibre filter, in particular a fleece filter, is provided with an electrically conductive substance, in particular metallic fibres, and/or is equipped with an electrically conductive substance, in particular carbon or carbon fibres, and/or is equipped with electrically conductive metal ions, in particular with the materials Fe, Ni, Cu, Ag, wherein the control unit (24) is designed to apply a variable voltage to the electrically conductive fibre filter in order to set a deposition rate of particles through electrostatic traction.

6. Ventilation system (2) according to one of Claims 1 to 5, wherein the at least one filter element (31a, 31b) comprises a fibre filter which can be deformed mechanically, contains a proportion of shape memory metals which permits the spatial extent of the filter element to be changed by changing the temperature, in order to set a filter characteristic.

7. Ventilation system (2) according to one of Claims 1 to 6, wherein the at least one filter element (31a, 31b) comprises a coated fibre filter, wherein the fibre filter, in particular a fleece filter, is coated with TiO₂ particles.

8. Ventilation system (2) according to one of Claims 1 to 7, wherein the variably adjustable filter apparatus (23) is arranged in the flow path of delivered air upstream of a fan device (21).

9. Method for operating a ventilation system (2) according to one of Claims 1 to 8 for a mobile device (1), wherein information about the air quality for a class of pollutants in the surroundings of the mobile device (1) is determined, and wherein the filter characteristic of the filter apparatus (23) is varied as a function of the information about the air quality.

10. Mobile device (1), in particular a motor vehicle having a ventilation system (2) according to one of Claims 1 to 8.

## Revendications

1. Système d'aération (2) pour un équipement mobile, en particulier un véhicule automobile, comprenant :
- un dispositif de filtre à réglage variable (23), le dispositif de filtre à réglage variable (23) présentant un ou plusieurs éléments filtrants (31a, 31b) dont la performance de filtration respective est réglable en continu, et le dispositif de filtre (23) présentant au moins une caractéristique de filtration variable pouvant être pilotée quant à une classe de d'émission ;
- un équipement (26, 28, 29) permettant d'acquérir une information concernant la qualité de l'air dans l'environnement de l'équipement mobile (1) et une information concernant la qualité de l'air dans un espace intérieur (11) de l'équipement mobile (1), l'équipement permettant d'acquérir une information concernant la qualité de l'air dans l'espace intérieur (11) de l'équipement mobile (1) comprenant un équipement de mesure (29) supplémentaire pour mesurer au moins une indication concernant la qualité de l'air pour une classe d'émission ;
- une unité de commande (24) qui est réalisée pour faire varier de manière variable et continue la caractéristique de filtration du dispositif de filtre (23) en fonction de l'information concernant la qualité de l'air dans l'environnement de telle sorte qu'une indication concernant une qualité de l'air pertinente pour une classe d'émission est déterminée à partir de ladite au moins une indication concernant la qualité de l'air pour la classe d'émission pertinente dans l'environnement et de ladite au moins une indication concernant la qualité de l'air pour la classe d'émission pertinente dans l'espace intérieur (11) en fonction d'une proportion d'air ambiant, l'unité de commande (24) étant réalisée pour faire varier en continu la caractéristique de filtration du dispositif de filtre (23) en fonction de l'indication concernant la qualité de l'air pertinente de façon à atteindre une qualité de l'air souhaitée dans l'espace intérieur (11) .

2. Système d'aération (2) selon la revendication 1, dans lequel l'équipement permettant d'acquérir l'information concernant une qualité de l'air dans l'environnement de l'équipement mobile comprend un équipement de mesure (26) pour mesurer au moins une indication concernant la qualité de l'air et/ou un équipement de communication (28) qui est réalisé pour recevoir de l'extérieur au moins une indication concernant la qualité de l'air pour une classe d'émission dans l'environnement de l'équipement mobile (1) .

3. Système d'aération (2) selon l'une quelconque des revendications 1 à 2, dans lequel l'unité de commande (24) est réalisée pour faire varier la caractéristique de filtration du dispositif de filtre (23) pour la classe d'émission en question en fonction de l'information concernant la qualité de l'air pour une classe d'émission dans l'environnement de l'équipement mobile (1) de telle sorte que pendant la conduite, des variations de la qualité de l'air dans un espace intérieur (11) de l'équipement mobile (1) sont réduites par rapport aux variations de la qualité de l'air dans l'environnement de l'équipement mobile (1).

4. Système d'aération (2) selon la revendication 1, dans lequel la performance de filtration de l'élément filtrant (31a, 31b) en question est réglable à l'aide d'une conduite de dérivation (32) et d'une soupape de dérivation (33) disposée dans celle-ci afin de régler la différence de pression au-dessus de l'élément filtrant (31a, 31b) en question.

5. Système d'aération (2) selon l'une quelconque des revendications 1 à 4, dans lequel ledit au moins un élément filtrant (31, 31b) comprend un filtre de fibres, le filtre de fibres, en particulier un filtre en non tissé, étant doté d'une substance électriquement conductrice, en particulier de fibres métalliques, et/ou étant équipé d'une substance électriquement conductrice, en particulier de carbone ou de fibres de carbone, et/ou étant équipé d'ions métalliques électriquement conducteurs, en particulier des matériaux Fe, Ni, Cu, Ag, dans lequel l'unité de commande (24) est réalisée pour appliquer une tension variable au filtre de fibres électriquement conducteur afin de régler un taux de séparation de particules par attraction électrostatique.

6. Système d'aération (2) selon l'une quelconque des revendications 1 à 5, dans lequel ledit au moins un élément filtrant (31a, 31b) comprend un filtre de fibres qui est mécaniquement déformable, contient une partie de métaux à mémoire de forme permettant une modification de l'étendue spatiale de l'élément filtrant au moyen d'un changement de température pour régler une caractéristique de filtration.

7. Système d'aération (2) selon l'une quelconque des revendications 1 à 6, dans lequel ledit au moins un élément filtrant (31a, 31b) comprend un filtre de fibres à revêtement, le filtre de fibres, en particulier le filtre en non tissé, étant recouvert de particules de TiO₂.

8. Système d'aération (2) selon l'une quelconque des revendications 1 à 7, dans lequel le dispositif de filtre à réglage variable (23) est disposé sur un trajet d'écoulement d'air refoulé avant un équipement d'aération (21).

9. Procédé pour faire fonctionner un système d'aération (2) selon l'une quelconque des revendications 1 à 8 pour un équipement mobile (1), dans lequel une information concernant la qualité de l'air est déterminée pour une classe d'émission dans l'environnement de l'équipement mobile (1), et dans lequel la caractéristique de filtration du dispositif de filtre (23) est amenée à varier en fonction de l'information concernant la qualité de l'air.

10. Equipement mobile (1), en particulier véhicule automobile, comprenant un système d'aération (2) selon l'une quelconque des revendications 1 à 8.
